# EUROPÄISCHE PATENTSCHRIFT

(11) **EP 0 667 066 B1**
(45) Veröffentlichungstag und Bekanntmachung des Hinweises auf die Patenterteilung: **18.09.1996**
(21) Anmeldenummer: 93921818.6
(22) Anmeldetag: 12.10.1993
(51) Int. Cl.: H04B 3/23

(54) **ECHOKOMPENSATIONSVORRICHTUNG**
ECHO COMPENSATION DEVICE
DISPOSITIF DE COMPENSATION D'ECHO

(30) Priorität: 27.10.1992 DE 4236272
(43) Veröffentlichungstag der Anmeldung: 16.08.1995
(73) Patentinhaber: SIEMENS AKTIENGESELLSCHAFT, 80333 München (DE)
(72) Erfinder: BIEDERMANN, Rolf, D-46499 Hamminkeln (DE); TELGES, Burkhard, D-46414 Rhede (DE)
(86) Internationale Anmeldenummer: DE9300968
(87) Internationale Veröffentlichungsnummer: WO9410760

(56) Entgegenhaltungen:
- US-A- 4 064 379

## Beschreibung

Die Erfindung betrifft eine Echokompensationsvorrichtung, die ein digitales Filter in Form eines digitalen Transversalfilters mit einem Eingang hat für eine Informationsübertragungsanlage. Insbesondere betrifft sie eine Gabelschaltung, - auch 4-Draht-/2-Draht-Schnittstelle genannt - , mit einer solchen Echokompensationsvorrichtung.

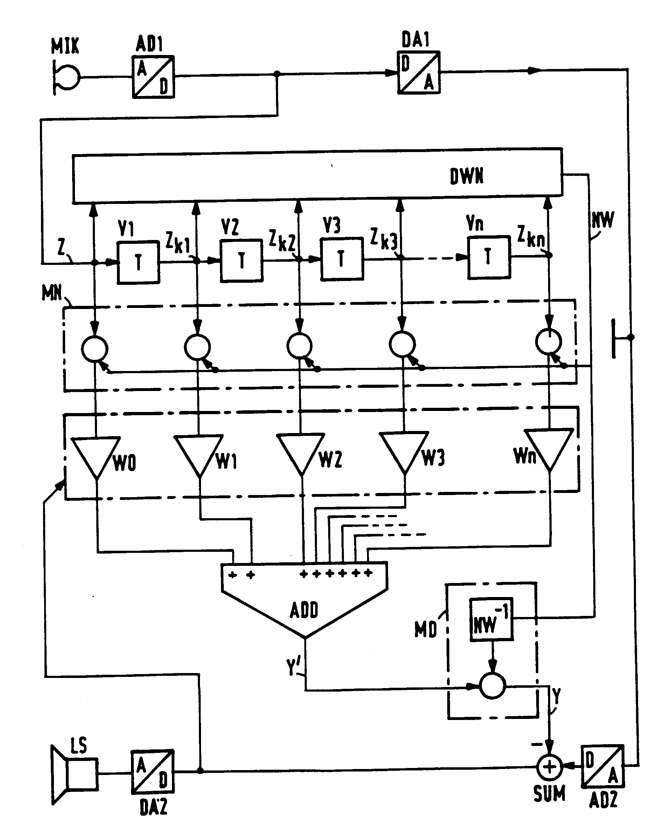

Die allgemeine Problematik solcher Gabelschaltungen ist aus dem Buch "ADAPTIVE SIGNAL PROCESSING" von B. Widrow und S.D. Stearns, 1985 Prentice Hall, Angelwood Cliffs, New Jersey, USA auf den Seiten 338 bis 347 in Verbindung mit den Seiten 15 bis 29 beschrieben. Insbesondere zeigt Figur 12.30 auf Seite 344 ein Blockschaltbild einer Informationsübertragungsanlage mit adaptiver Echokompensationsvorrichtung, deren Signalverlaufsmodell in Figur 12.31 auf Seite 345 dargestellt ist und die auf den Seiten 344 bis 346 beschrieben wird. Ein geeignetes FIR-Filter (Abkürzung für den englischsprachigen Ausdruck Finity Impulse Response Filter) wird als adaptives Transversalfilter mit einem Eingang in Figur 2.2 auf Seite 17 gezeigt und auf den Seiten 16 und 17 beschrieben. Bei einem solchen Filter wird ein Eingangssignal über eine Kettenschaltung von Verzögerungsgliedern mit gleichgroßem Verzögerungsfaktor geführt, wobei jeweils das Ausgangssignal eines Verzögerungsgliedes als Eingangssignal für das folgende Verzögerungsglied vorgesehen ist. Sowohl das Eingangssignal der Gesamtschaltung als auch die Ausgangssignale aller Verzögerungsglieder werden jeweils mit einem Koeffizienten gewichtet und diese gewichteten Werte werden zu einem gemeinsamen Ausgangssignal addiert. Bei einer Gabelschaltung mit adaptivem Filter werden die Koeffizienten während des Betriebes den jeweiligen Betriebsbedingungen, insbesondere der Leitungslänge und dem Reflexionsgrad der Anlage, automatisch angepaßt. Weniger komfortable Gabelschaltungen, die bei Verwendung in üblicherweise unveränderlichen Netzbereichen eine Anpassung des Eingangsscheinwiderstandes der Gabelschaltung an die Leitung in ausreichendem Maße gewährleisten, verwenden Filter mit auf die Leitung abgestimmt festeingestellten Koeffizienten. Grundlagen zu geeigneten Adaptionsalgorithmen sind auf den Seiten 19 ff. des obengenannten Buches dargelegt. Besonders günstig eignet sind ein sogenanntes MMSE-Verfahren (von dem englischsprachigen Ausdruck Minimum Mean-Square Error, auch LMS für Last Mean-Square), das den quadratischen Fehlermittelwert berücksichtigt.

Mit speziellen Problemen von Gabelschaltungen mit Echokompensationsvorrichtung und deren Lösung befassen sich die DE-PS 31 41 502 (US-PS 4,381,561), die US-PS 3,633,105, die US-PS 3,789,560, die EP-OS 0 448 753 (US-Serial-No. 676.197/91) und die EP-OS 0 448 754 (US-Serial-No. 378.193/91). Eine Ausführungsform einer solchen 2/4-Draht-Hybrid-Schaltung sowie deren Funktionsweise wird in dem Artikel "A Signal-Processing Codec Filter for PCM Applications" von D. Vogel, E. Schmid, J. Reisinger und L. Lerach, veröffentlicht in Siemens Forschungs- und Entwicklungsberichte 15 (1985) Nr. 5, Berlin, W.Germany auf den Seiten 253 bis 258 beschrieben. Dieser Artikel befaßt sich mit einer Gabelschaltung, deren Echokompensationsvorrichtung ein adaptives FIR-Filter enthält, das mit Hilfe des Leaky-LMS-Adaptionsalgorithmus den Echopfad an der 4/2-Draht-Schnittstelle nachbildet, um dadurch das an der Gabel auftretende Echo auszulöschen.

Die US-A-4,064,379 beschreibt eine Echokompensationsvorrichtung für eine Gabelschaltung, in der analoge Eingangssignale zeitdiskret abgetastet werden und in einen Digitalcode nach A-Law umgesetzt werden. Die Abtastwerte sowie die Koeffizienten werden in Schieberegistern gespeichert und in logaritmischer Form durch Addition in einer Summationsvorrichtung zu einem Ausgangssignalwert multipliziert.

Allen zuvor beschriebenen Gabelschaltungen gemeinsam ist es, daß durch Wortlängenbegrenzung in dem zur Realisierung des Filters erforderlichen Signalprozessor Rechenungenauigkeiten auftreten. Aufgrund solcher Rechenungenauigkeiten kann die jeweils verwendete Echokompensationsvorrichtung bei leisen Eingangssignalen bzw. kleinen Eingangspegeln nicht arbeiten.

Aufgabe der vorliegenden Erfindung ist es, eine Gabelschaltung mit Echokompensationsvorrichtung bzw. eine solche Echokompensationsvorrichtung bereitzustellen, mit der auch bei kleinen Eingangssignalpegeln eine Echounterdrückung gewährleistet ist.

Die Erfindung löst diese Aufgabe durch eine Echokompensationsvorrichtung nach dem Patentanspruch 1 bzw. eine 4-Draht/2-Draht-Schnittstelle nach dem Patentanspruch 2. Günstige Ausgestaltungsformen sind Gegenstände von jeweiligen Unteransprüchen.

Erfindungsgemäß ist bei einer gattungsgemäßen Echokompensationsvorrichtung für eine Informationsübertragungseinrichtung eine Normierungswerteinrichtung vorgesehen, die jeweils in dem durch die Laufzeit der Verzögerungselemente vorgegebenen Takt alle Signalwerte, also sowohl den Wert des Eingangssignales, als auch die Werte der zeitverzögerten Signale, bewertet und aufgrund dieser Bewertung aller Signalwerte einen Normierungswert festlegt. Außerdem ist erfindungsgemäß eine Vorrichtung zum Normieren aller jeweils aktuellen Signalwerte mit dem zugehörigen Normierungswert vorgesehen. Unter Normierung ist hierbei üblicherweise entweder eine Division durch den Normierungswert oder eine Multiplikation mit dem Normierungswert zu verstehen.

Durch diese Normierung werden bei leisem Eingangssignal auftretende kleine Signalwerte in größere Signalwerte umgerechnet, bevor sie mit den jeweils zugeordneten Filterkoeffizienten gewichtet werden. Diese für die Filterfunktion wesentlichen Berechnungen werden also unabhängig von der tatsächlichen Größe des Eingangssignalwertes und der entsprechenden zeitverzögerten Signalwerte immer mit relativ großen Signalwerten durchgeführt.

Nach erfolgter Addition der gewichteten normierten Signalwerte wird der Wert des Ausgangssignales erfindungsgemäß durch eine Vorrichtung zum Entnormieren mit dem gleichen Normierungswert, mit dem zuvor die Signalwerte normiert worden waren, entnormiert. Unter Entnormierung versteht man in diesem Falle das Anwenden einer Rechenvorschrift auf ein Signal, das die Anwendung der Normierungsrechenvorschrift aufhebt. Falls die Normierung durch Multiplikation durchgeführt worden ist, wird folglich die Entnormierung durch Division durch den Multiplikator der Normierung durchgeführt, falls die Normierung eine Divisionsvorschrift war, ist die Entnormierungsvorschrift eine entsprechende Multiplikationsvorschrift. Besonders günstig ist es, wenn der Normierungsfaktor von dem jeweils größten Signalwert hergeleitet wird.

Bei einem besonders einfachen Ausführungsbeispiel der vorliegenden Erfindung ermittelt die Normierungswerteinrichtung den größten Signalwert, die Vorrichtung zum Normieren dividiert alle Signalwerte durch diesen größten Signalwert und die Vorrichtung zum Entnormieren multipliziert das Endergebnis der Addition der gewichteten normierten Signalwerte mit dem Wert des ermittelten größten Signalwertes. Der Normierungswert kann jedoch auch auf irgendeine andere Art proportional zu dem größten ermittelten Signalwert ausgewählt werden.

Eine erfindungsgemäße Gabelschaltung bzw. 4-Draht/2-Draht-Schnittstelle verwendet eine zuvor beschriebene Echokompensationsvorrichtung.

Nachstehend wird die Erfindung anhand eines in der Figur gezeigten Ausführungsbeispieles näher erläutert.

Die Figur zeigt ein Ausführungsbeispiel einer erfindungsgemäßen 4-Draht/2-Draht-Schnittstelle unter Verwendung einer erfindungsgemäßen Echokompensationsvorrichtung.

In dem in der Figur gezeigten Ausführungsbeispiel stellt eine analoge Signalquelle, beispielsweise ein Mikrophon MIK über einen ersten Analogdigitalumsetzer AD1 ein Signal Z bereit. Dieses Signal Z wird im dargestellten Ausführungsbeispiel über einen ersten Digitalanalogwandler DA1 auf eine analoge 2-Draht-Leitung gegeben und von dieser teilweie reflektiert einem von einer nicht dargestellten Signalquelle ausgehenden Signal überlagert über einen zweiten Analogdigitalwandler AD2 zur 4-Draht/ 2-Draht-Schnittstelle zurückgegeben. Das Ausgangssignal des Analogdigitalwandlers AD2 wird in einen Summationspunkt SUM geführt und das Ausgangssignal dieses Summationspunktes wird über einen zweiten Digitalanalogwandler DA2 zu einer analogen Signalsenke, beispielsweise einem Lautsprecher LS übertragen.

Das Digitalsignal Z dient als Eingangssignal für ein Transversalfilter mit einer Hintereinanderschaltung gleichartiger Verzögerungselemente V1, V2, V3 ... Vn. Hierbei stellt jedes Verzögerungselement V1, V2 etc. an seinem Ausgang jeweils den um den Zeitraum T verzögerten Wert des an seinem Eingang anliegenden Signales bereit. Das Verzögerungselement V1 stellt somit an seinem Ausgang den Signalwert Zₖ₁ bereit, der dem vor der Zeit T an seinem Eingang anliegenden Signalwert Z entspricht. In gleichem Zusammenhang stehen die Signalwerte Zₖ₂ am Ausgang des Verzögerungselementes V2 bzw. am Eingang des Verzögerungselementes V3 sowie die Signalwerte Zₖ₃... und Zₖₙ. Eine Normierungswerteinrichtung DWN ermittelt bei jeder Änderung der Signalwerte Z, Zₖ₁, Zₖ₂,...Zₖₙ den jeweils größten Wert dieser Werte und stellt in Abhängigkeit hiervon an ihrem Ausgang einen Normierungswert NW bereit. In einer Vorrichtung MN zum Normieren werden alle Sigalwerte Z, Zₖ₁, Zₖ₂, ... Zₖₙ mit dem ihnen zugeordneten gleichen Normierungswert NW normiert. Die normierten Signalwerte werden dann, jeder mit dem ihm zugeordneten Filterkoeffizienten W0, W1, W2, W3, ... bzw. Wn gewichtet und dann in einer Summationsvorrichtung ADD addiert. Das sich daraus ergebende Signal Y' wird in einer Vorrichtung MD zum Entnormieren mit dem gleichen Normierungswert NW entnormiert, der zuvor zur Normierung der Eingangssignale verwendet worden ist. Außerdem wird bei der Entnormierung der Kehrwert der Rechenvorschrift angewandt, der bei der Normierung verwendet worden ist. Die Vorrichtung MD zur Entnormierung stellt an ihrem Ausgang ein Ausgangssignal Y des Transversalfilters bereit. Dieses Ausgangssignal Y wird in der Summationsvorrichtung SUM von dem Ausgangssignal des Analogdigitalwandlers AD2 subtrahiert, wodurch ein eventuell rückübertragenes Echo des Signales Z kompensiert werden soll.

Bei dem in der Figur dargestellten Ausführungsbeispiel wird ein adaptives Transversalfilter verwendet, was durch einen Steuerabgriff zum Einstellen der Koeffizienten W0, W1, W2 ... Wn am Ausgang der Summationsschaltung SUM dargestellt ist.

Vorzugsweise werden erfindungsgemäße Echokompensationsvorrichtungen durch entsprechend gesteuerte Signalprozessoren realisiert.

## Patentansprüche

1. Echokompensationsvorrichtung für eine Informationsübertragungseinrichtung, mit einem digitalen Transversalfilter für amplituden- und zeitdiskretisierte Eingangssignale, das eine Hintereinanderschaltung gleichartiger Verzögerungselemente (V1, V2, V3,...Vn) enthält, wobei der momentane Eingangssignalwert (Z) sowie die zeitverzögerten Signalwerte (Zₖ₁, Zₖ₂,...Zₖₙ) jeweils mit einem Koeffizienten (W₀, W₁, W₂,...Wₙ) gewichtet werden und in einer Summationsvorrichtung (ADD) zu einem Ausgangssignalwert (Y) addiert werden, gekennzeichnet durch eine Normierungswerteinrichtung (DWN) zum Bewerten aller jeweiligen Signalwerte (Z, Zₖ₁, Zₖ₂,...Zₖₙ) und zum Ausgeben eines in Abhängigkeit von dieser Bewertung festgelegten Hormierungswertes (NW), durch eine Vorrichtung (MN) zum Normieren aller jeweiligen Signalwerte (Z, Zₖ₁, Zₖ₂,...Zₖₙ) mit diesem Normierungswert (NW) und durch eine Vorrichtung (MD) zum Entnormieren des Ausgangssignalwertes (Y') der Summationsvorrichtung (ADD) mit dem gleichen Normierungswert (NW).

2. 4-Draht-/2-Draht-Schnittstelle mit mindestens einer Echokompensationsvorrichtung, die ein digitales Transversalfilter für amplituden- und wertdiskretisierte Eingangssignale mit einer Hintereinanderschaltung gleichartiger Verzögerungselemente (V1, V2, V3,...Vn) enthält, wobei der momentane Eingangssignalwert (Z) sowie die zeitverzögerten Signalwerte (Zₖ₁, Zₖ₂,...Zₖₙ) jeweils mit einem Koeffizienten (W₀, W₁, W₂,...Wₙ) gewichtet werden und in einer Summationsvorrichtung (ADD) zu einem Ausgangssignalwert (Y) addiert werden, gekennzeichnet durch eine Normierungswerteinrichtung (DWN) zum Bewerten aller jeweiligen Signalwerte (Z, Zₖ₁, Zₖ₂,...Zₖₙ) und zum Ausgeben eines in Abhängigkeit von dieser Bewertung festgelegten Hormierungswertes (NW), durch eine Vorrichtung (MN) zum Normieren aller jeweiligen Signalwerte (Z, Zₖ₁, Zₖ₂,...Zₖₙ) mit diesem Normierungswert (NW) und durch eine Vorrichtung (MD) zum Entnormieren des Ausgangssignalwertes (Y') der Summationsvorrichtung (ADD) mit dem gleichen Normierungswert (NW).

3. Echokompensationsvorrichtung nach Anspruch 1, dadurch **gekennzeichnet** ,daß die Normierungswerteinrichtung (DWN) den jeweiligen maximalen Signalwert (Z, Zₖ₁, Zₖ₂,... oder Zₖₙ) ermittelt und einen in Abhängigkeit von diesem maximalen Signalwert festgelegten Normierungswert (NW) ausgibt.

4. Echokompensationsvorrichtung nach einem der Ansprüche 1 oder 3, dadurch **gekennzeichnet** ,daß der Normierungswert (NW) linear abhängig ist von dem jeweiligen maximalen Signalwert (Z, Zₖ₁, Zₖ₂,... oder Zₖₙ).

5. Echokompensationsvorrichtung nach einem der Ansprüche 1, 3 oder 4, dadurch **gekennzeichnet** , daß als digitales Transversalfilter ein adaptives digitales Filter vorgesehen ist.

6. 4-Draht-/2-Draht-Schnittstelle nach Anspruch 2, dadurch **gekennzeichnet** ,daß die Normierungswerteinrichtung (DWN) den jeweiligen maximalen Signalwert (Z, Zₖ₁, Zₖ₂,... oder Zₖ) ermittelt und einen in Abhängigkeit von diesem maximalen Signalwert festgelegten normierungswert (NW) ausgibt.

7. 4-Draht-/2-Draht-Schnittstelle nach einem der Ansprüche 2 oder 6, dadurch **gekennzeichnet** ,daß der Normierungswert (NW) linear abhängig ist von dem jeweiligen maximalen Signalwert (Z, Zₖ₁, Zₖ₂,... oder Zₖₙ)

8. 4-Draht-/2-Draht-Schnittstelle nach einem der Ansprüche 2, 6 oder 7, dadurch **gekennzeichnet** , daß als digitales Transversalfilter ein adaptives digitales Filter vorgesehen ist.

## Claims

1. Echo compensation device for an information transmission system having a digital transverse filter for amplitude-discrete and time-discrete input signals which contains a series circuit of identical delay elements (V1, V2, V3,...Vn), the instantaneous input signal value (Z) and the time-delayed signal values (Zₖ₁, Zₖ₂,... Zₖₙ) respectively being weighted with a coefficient (W₀, W₁, W₂,...Wₙ) and added in a summing device (ADD) to form an output signal value (Y), characterized by a scale-value device (DWN) for evaluating all the respective signal values (Z, Zₖ₁, Zₖ₂,...Zₖₙ) and for outputting a scale value (NW) established as a function of this evaluation, by a device (MN) for scaling all the respective signal values (Z, Zₖ₁, Zₖ₂, ...Zₖₙ) with this scale value (NW), and by a device (MD) for descaling the output signal value (Y') of the summing device (ADD) with the same scale value (NW).

2. 4-Wire/2-wire interface having at least one echo compensation device which contains a digital transverse filter for amplitude-discrete and value-discrete input signals having a series circuit of identical delay elements (V1, V2, V3,...Vn), the instantaneous input signal value (Z) and the time-delayed signal values (Zₖ₁, zₖ₂,...Zₖₙ) respectively being weighted with a coefficient (W₀, W₁, W₂,...Wₙ) and added in a summing device (ADD) to form an output signal value (Y), characterized by a scale-value device (DWN) for evaluating all the respective signal values (Z, Zₖ₁, Zₖ₂,...Zₖₙ) and for outputting a scale value (NW) established as a function of this evaluation, by a device (MN) for scaling all the respective signal values (Z, Zₖ₁, Zₖ₂, ...Zₖₙ) with this scale value (NW), and by a device (MD) for descaling the output signal value (Y') of the summing device (ADD) with the same scale value (NW).

3. Echo compensation device according to Claim 1, characterized in that the scale-value device (DWN) determines the respective maximum signal value (Z, Zₖ₁, Zₖ₂, ... or Zₖₙ) and outputs a scale value (NW) established as a function of this maximum signal value.

4. Echo compensation device according to one of Claims 1 or 3, characterized in that the scale value (NW) is linearly dependent on the respective maximum signal value (Z, Zₖ₁, Zₖ₂, ... or Zₖₙ).

5. Echo compensation device according to one of Claims 1, 3 or 4, characterized in that as the digital transverse filter an adaptive digital filter is provided.

6. 4-Wire/2-wire interface according to Claim 2, characterized in that the scale value device (DWN) determines the respective maximum signal value (Z, Zₖ₁, Zₖ₂, ... or Zₖₙ) and outputs a scale value (NW) established as a function of this maximum signal value.

7. 4-Wire/2-wire interface according to one of Claims 2 or 6, characterized in that the scale value (NW) is linearly dependent on the respective maximum signal value (Z, Zₖ₁, Zₖ₂, ... or Zₖₙ).

8. 4-Wire/2-wire interface according to one of Claims 2, 6 or 7, characterized in that an adaptive digital filter is provided as the digital filter.

## Revendications

1. Dispositif de compensation d'écho pour un dispositif de transmission d'information, comportant un filtre numérique transversal de signaux d'entrée rendus discrets en amplitude et en temps (1), qui comprend des éléments (V1, V2, V3 ... Vn) à retard du même type branchés l'un derrière l'autre, la valeur (Z) instantanée du signal d'entrée ainsi que les valeurs (Zₖ₁, Zₖ₂ à Zₖₙ) du signal retardées étant pondérées chacune par un coefficient (W₀, W₁, W₂ à Wₙ) et étant additionnées dans un dispositif (ADD) sommateur en une valeur (Y) de signal de sortie, caractérisé par un dispositif (DWN) à valeur de normation destiné à l'évaluation de toutes les valeurs (Z, Zₖ₁, Zₖ₂ à Zₖₙ) du signal et à la fourniture d'une valeur (NW) de normation fixée en fonction de cette évaluation, par un dispositif (MN) de normation de toutes les valeurs (Z, Zₖ₁, Zₖ₂ à Zₖₙ) du signal par cette valeur (NW) de normation et par un dispositif (MD) de normation inverse de la valeur (Y') du signal de sortie du dispositif (ADD) sommateur par la même valeur (NW) de normation.

2. Interface 4 fils/2 fils comportant au moins un dispositif de compensation d'écho, qui comprend un filtre numérique transversal de signaux d'entrée rendus discrets en amplitude et en temps, comportant des éléments (V₁, V₂, V₃ à Vₙ) à retard du même type branchés l'un derrière l'autre, la valeur (Z) instantanée du signal d'entrée ainsi que les valeurs (Zₖ₁, Zₖ₂ à Zₖₙ) retardées du signal étant pondérées chacune par un coefficient (W₀, W₁, W₂ à Wₙ) et étant additionnées dans un dispositif sommateur (ADD) en une valeur (Y) de signal de sortie, caractérisée par un dispositif (DWN) à valeur de normation destiné à l'évaluation de toutes les valeurs (Z, Zₖ₁, Zₖ₂ à Zₖₙ) du signal et à la fourniture d'une valeur (NW) de normation fixée en fonction de cette évaluation, par un dispositif (MN) de normation de toutes les valeurs (Z, Zₖ₁, Zₖ₂ à Zₖₙ) du signal par cette valeur (NW) de normation et par un dispositif (MD) de normation inverse de la valeur (Y') du signal de sortie du dispositif sommateur (ADD) par la même valeur (NW) de normation.

3. Dispositif de compensation d'écho suivant la revendication 1, caractérisé en ce que le dispositif (DWN) à valeur de normation détermine la valeur (Z, Zₖ₁, Zₖ₂ ... ou Zₖₙ) maximum du signal et fournit une valeur (NW) de normation fixée en fonction de cette valeur maximum du signal.

4. Dispositif de compensation d'écho suivant l'une des revendications 1 à 3, caractérisé en ce que la valeur (NW) de normation dépend linéairement de la valeur maximum considérée du signal (Z, Zₖ₁, Zₖ₂ ou Zₖₙ).

5. Dispositif de compensation d'écho suivant l'une des revendications 1, 3 ou 4, caractérisé en ce qu'il est prévu comme filtre numérique transversal, un filtre numérique adaptatif.

6. Interface 4 fils/2 fils suivant la revendication 2, caractérisée en ce que le dispositif (DWN) à valeur de normation détermine la valeur (Z, Zₖ₁, Zₖ₂, ... ou Zₖₙ) maximum du signal et fournit une valeur (NW) de normation fixée en fonction de cette valeur maximum du signal.

7. Interface 4 fils/2 fils suivant l'une des revendications 2 ou 6, caractérisée en ce que la valeur (NW) de normation dépend linéairement de la valeur maximale considérée du signal (Z, Zₖ₁, Zₖ₂, ... ou Zₖₙ).

8. Interface 4 fils/2 fils suivant l'une des revendications 2, 6 ou 7, caractérisée en ce qu'il est prévu comme filtre numérique transversal, un filtre numérique adaptatif.
